# EUROPEAN PATENT APPLICATION

(11) **EP 4 464 394 A1**
(43) Date of publication of application: **20.11.2024**
(21) Application number: 23740204.5
(22) Date of filing: 05.01.2023
(51) Int. Cl.: B01D 9/02, B01D 61/44, C01D 15/02, C25B 1/16, C25B 1/22

(54) **METHOD FOR MANUFACTURING LITHIUM HYDROXIDE**

(30) Priority: 14.01.2022 JP 2022004700
(71) Applicant: Toda Kogyo Corp., Hiroshima-shi, Hiroshima 732-0828 (JP)
(72) Inventor: HONDA, Tomohiro, Otake-shi, Hiroshima 739-0652 (JP); ZHANG, Anyu, Otake-shi, Hiroshima 739-0652 (JP); YOKOTA, Masayuki, Otake-shi, Hiroshima 739-0652 (JP); TAGAMI, Nobuyuki, Otake-shi, Hiroshima 739-0652 (JP)
(74) Representative: J A Kemp LLP
(86) International application number: PCT/JP2023/000069
(87) International publication number: WO 2023/136195

(57) **Abstract**

[Technical Problem]

The present invention provides an efficient producing method of high-purity lithium hydroxide, capable of increasing the yield of lithium hydroxide, removing alkali metal impurities, and reducing the amount of by-products generated.

[Solution to Problem]

A process for producing lithium hydroxide from lithium sulfate as a starting material containing at least one of sodium and potassium as impurities, which process comprises the following steps of (A) to (F):
(A) a production step of an aqueous lithium hydroxide solution and sulfuric acid by an electrochemical membrane separation method using lithium sulfate as a raw material;
(B) a crystallization step producing a lithium hydroxide crystal by crystallization using the obtained aqueous lithium hydroxide solution in the above electrochemical membrane separation step as a raw material;
(C) a solid-liquid separation step in which a portion of slurry in the above crystallization step is discharged and is subjected to solid-liquid separation to separate a lithium hydroxide crystal and crystallization mother liquor, and thereafter a washing step to clean the separated solid content;
(D) a carbonation step obtaining a slurry comprising a lithium-containing carbonate compound as a solid content by discharging a portion of crystallization mother liquor in said crystallization step and reacting said discharged crystallization mother liquor with carbon dioxide gas, and a solid-liquid separation step separating said slurry into a lithium-containing solid content and a liquid content;
(E) an acid dissolution step producing a lithium sulfate aqueous solution by reacting said lithium-containing solid content with sulfuric acid;
(F) a mixing step reusing the lithium sulfate aqueous solution obtained by said acid dissolution step as the raw material of said step of (A).

## Description

### TECHNICAL FIELD

The present invention relates to a process for producing lithium hydroxide using lithium sulfate as a starting material. More specifically, the present invention relates to a process in which lithium hydroxide can be obtained in high yield while sodium and potassium contained therein as impurities can be removed.

### BACKGROUND ARTS

In recent years, in order to produce batteries having higher performance and higher energy density, many studies and practical applications of battery materials containing lithium as a raw material have been promoted not only for secondary batteries but also for primary batteries. In a situation where the production amount of such battery materials is increasing, there is a growing demand for lithium hydroxide, which has better reactivity, rather than conventionally and widely used lithium carbonate.

Lithium chloride and lithium sulfate are widely used as a lithium compound raw material for producing lithium hydroxide. However, when lithium chloride is used as the raw material, it is necessary to treat hydrochloric acid and chlorine gas as by-products and reaction materials, which inevitably increases requirements on the equipment specification. In addition, the produced lithium hydroxide as the final product is likely to be contaminated with chlorine, and a further purification step is required to use it as a high-purity grade lithium hydroxide, which is undesirable because it is not cost effective.

As the production step of lithium hydroxide, electrochemical membrane separation steps, that is electrodialysis method and compartment-type electrolysis method have been studied and put into practical use. However, because of handling strong caustic and reactive chlorine ions in case of containing chlorides in the materials, metal types and membrane types used in the membrane separation step are too limited so that an efficient operation is difficult. On the other hand, in case of using lithium sulfate as the starting material, since equipment made of a conventional material can be used, the limitation to the electrochemical membrane separation step is greatly reduced so that an efficient operation can be performed.

In the general purification process accompanying the electrochemical membrane separation step, the separation of polyvalent metals mixed as impurities can be relatively easily removed using known techniques. However, it is not easy to efficiently remove alkali metals such as sodium and potassium, as well as lithium.

For example, as a method for removing alkali metal impurities such as sodium and potassium from an aqueous solution containing lithium as a main component, methods using an ion exchange resin or using a medium which selectively adsorbs lithium are known. However, there are problems where a yield of lithium hydroxide as a usable product is significantly decreased due to the requirement of a high-purity lithium hydroxide in the step of regenerating the ion-exchange resin adsorbing impurities or in the step of increasing the alkali metal ion selectivity of the ion-exchange resin, or problems where additional impurities are mixed in the step of desorbing lithium from the lithium selective adsorbent or the type of reaction solution used for desorption is restricted. Therefore, it is difficult to establish an efficient impurity removal technique that can realize a high yield and a minimal step.

It is a well-known technique that the purity of lithium hydroxide can be enhanced by crystallization. However, in order to keep the high purity of lithium hydroxide crystals as the product, it is necessary to purge the mother liquor of concentrated alkali metal impurities such as sodium and potassium, and this operation is generally done by discharging the mother liquor itself (this operation is called "blow" or "bleed", but is called "blow" in the present invention). Although it is possible to purify lithium hydroxide crystals, the yield of lithium hydroxide cannot be enhanced due to this blow operation because high-concentration lithium is also discharged out of the system at the same time.

In order to attain an effect of reducing sodium and potassium retained in the production step of lithium hydroxide while a part of the crystallization mother liquor is recycled to the raw material system, Patent Literature 1 discloses a method of concentrating salt water to precipitate sodium chloride and potassium chloride, as a technique of removing alkali metals such as sodium and potassium from the raw material aqueous solution. However, this method is effective only for systems using lithium chloride as a raw material, and cannot be applied to systems using lithium sulfate as a main component.

Further, from the viewpoint of separating sodium and potassium from lithium, there is a known method using reaction that changes the compound form, obtaining high-purity lithium carbonate with sodium and potassium are removed, by reacting lithium hydroxide with carbon dioxide. Patent Literature 2 can be mentioned as an example of this technique. However, in this technique, in order to obtain high-purity lithium carbonate at a high yield, it is necessary to use less than the stoichiometric amount of carbon dioxide. In the steps of washing and separating the reaction mother liquor from lithium carbonate obtained as a solid product, lithium carbonate is dissolved and flowed out so that the percentage of lithium in the raw material recovered as purified lithium carbonate is around 70%. Therefore, if the washing operation is strictly performed or the purification operation is repeated in order to obtain lithium carbonate of higher purity, the yield of lithium further decreases. Although it is possible to produce lithium hydroxide by a known method using lithium carbonate purified as a raw material in this method, the overall yield of lithium hydroxide to the recycled lithium raw material is lower than that of the above-mentioned carbonate, so as to greatly reduce the cost performance of lithium hydroxide production.

In order to improve the yield of lithium, Patent Literature 3 discloses that an aqueous solution of lithium hydroxide obtained from an electrodialysis step is subjected to concentration-crystallization, and a part of the concentration-crystallization step mother liquor is extracted and reacted with carbon dioxide so as to obtain lithium carbonate. However, in this method, the amount of lithium compound usable as a product is increased in the form of lithium carbonate, and the yield of lithium hydroxide obtained from the raw material lithium aqueous solution cannot be enhanced.

In general, the unit price of high-purity lithium hydroxide is higher than that of lithium carbonate, so that even a 1% change in the yield of lithium hydroxide makes a large difference in the resulting economic value. This tendency becomes more remarkable in recent years when the demand for lithium hydroxide is increasing. Therefore, it is more important to increase the yield of lithium as lithium hydroxide than to increase the yield of lithium as lithium carbonate.

In addition, there is known a method that the lithium carbonate produced together with lithium hydroxide as described above is reacted with calcium hydroxide to convert it into an aqueous lithium hydroxide solution and the obtained solution is returned to the lithium hydroxide concentration-crystallization step. However, the conversion to lithium hydroxide is not high (and thus leads to a decrease in yield) and new impurities are introduced from calcium hydroxide, so that the purity of lithium hydroxide as a product is reduced. Therefore, this method is not an efficient lithium recycling. Furthermore, since a large amount of calcium carbonate is produced as a by-product, the cost of waste disposal results in loss of economic efficiency, so this method is not an efficient lithium recycling.

Therefore, it is desired to establish a method for producing lithium hydroxide using lithium sulfate as a raw material, which achieves high-yield and efficient removal of impurities.

### CITATION LIST:

### PATENT LITERATURE

Patent Literature 1: Japanese Patent Application Laid-Open (KOHYO) No. 2011-518257
Patent Literature 2: Japanese Patent Application Laid-Open (KOKAI) No. 2004-196607
Patent Literature 3: Japanese Patent Application Laid-Open (KOHYO) No. 2021-507864

### SUMMARY OF INVENTION

### TECHNICAL PROBLEM

The present invention has been made in view of the above circumstances, an object of the present invention is to provide an efficient process for producing high-purity lithium hydroxide using lithium sulfate as a raw material, to enable the yield of lithium hydroxide increased, alkali metal impurities including sodium and potassium removed, while the generation of by-products significantly reduced simultaneously.

### SOLUTION TO PROBLEM

In order to solve the above problems, as a result of intensive studies by the present inventors, the following findings have been obtained.

In order to continuously obtain high-purity lithium hydroxide crystals at a high yield, it is necessary to constitute processes comprising a purification process of lithium hydroxide, an efficient removal and purge process of alkali metal impurities from the system with minimal steps of process and minimal amounts of byproducts generated, and a recovering and recycling process of lithium with reduced impurity content in a high yield.

It is well known that the crystallization method is effective as a means of obtaining high-purity lithium hydroxide crystals. However, as described above, it is not a technique obtaining high-purity lithium hydroxide crystals at a high yield in a continuous operation. In a system using lithium sulfate as a raw material, there is no established technique to recycle the lithium hydroxide crystallization mother liquor in which impurities are concentrated. Therefore, as disclosed in the prior arts, the conventional technique so as to increase the amount of lithium that can be used as a product is to use a part of the lithium hydroxide crystallization mother liquor as a raw material for lithium carbonate.

In addition, even if lithium hydroxide is produced via lithium carbonate by combining known techniques, as long as the conventional technique is used, the yield in the process of obtaining high-purity lithium carbonate restricts the total yield of lithium obtained as lithium hydroxide, so that it is not possible to overcome the limitation that the more a high purity product is obtained, the more the yield of lithium hydroxide is greatly reduced.

As a result of earnest studies by the present inventors, in the carbonation reaction step using an aqueous lithium hydroxide solution derived from the lithium hydroxide crystallization mother liquor as a raw material, the following findings has been obtained:
- allowing a certain degree of impurities to be mixed in the recycled lithium stream instead of alkali metal impurities removed to a high degree,
- enhancing the yield of lithium in the separation process of lithium and alkali metal impurities as much as possible, and
- reusing such raw material streams in the lithium hydroxide crystallization step through an electrochemical membrane separation process.

These features are effective for the production of high-purity lithium hydroxide and greatly enhance the yield of lithium hydroxide.

Thus, the present invention is a method for producing lithium hydroxide, which could not be realized by applying conventional techniques alone or by simply combining them. Namely, the present inventors have found a continuous production process for producing high-purity lithium hydroxide at a high yield while removing alkali metal impurities by discovering such a technique that a matter close to waste liquid which would be deemed as a waste matter and disposed with conventional techniques is reused (recycled) as raw materials through special steps.

Lithium hydrogen carbonate has higher solubility than lithium carbonate, sodium hydrogen carbonate has lower solubility than sodium carbonate, and potassium hydrogen carbonate has lower solubility than potassium carbonate. By these solubility properties, in order to obtain high-purity lithium carbonate at a high yield as possible in the conventional techniques, it is necessary to control the carbonation reaction so that unreacted lithium hydroxide remained in the reaction mother liquor, that is, the reaction pH in the carbonation step was not excessively lowered. However, in the carbonation step of the present invention, the conditions can be selected so as to optimize the yield of lithium rather than the degree of purification by carbonation so that the yield of lithium containing carbonate compounds containing lithium carbonate can be enhanced.

Furthermore, in order to recover lithium carbonate and lithium hydrogen carbonate dissolved in the carbonation reaction mother liquor, lithium-containing solids can be precipitated, separated and recovered by concentrating the liquid content obtained by solid-liquid separation of the slurry obtained in the carbonation step, and returned to the series of lithium hydroxide production processes.

One of the features of the present invention is to react the liquid contents obtained in the above concentration-crystallization step of the carbonation mother liquor and in the following solid-liquid separation step, with sulfuric acid that converts to a sulfate solution and additionally to conduct concentration-crystallization, so that it is possible to shift sodium and potassium into the solid content. Sodium sulfate and potassium sulfate have properties to form double salts with lithium sulfate respectively, so that it is often difficult to separate by the concentration-crystallization operation. However, a sufficient amount of lithium is separated from sodium and potassium in the above carbonation step before the concentration-crystallization operation of sulfate solution, it is possible to prevent the formation of double salts with lithium sulfate.

The double salt of sodium sulfate and potassium sulfate thus obtained, or the mixture thereof, is subjected to an appropriate washing operation thereby greatly reducing the lithium content, so that it can be reused as a raw material containing sodium or potassium according to known techniques. This makes it possible to effectively utilize sodium and potassium as resources, which sodium and potassium are contained as impurities and were subject to disposal.

The above reduction in the amount of sodium and potassium from the aqueous sulfate solution converted from the carbonation process mother liquor allows the remaining aqueous sulfate mother liquor to be recycled to the electrochemical membrane separation step. Therefore, it is possible to effectively utilize the lithium that could not be recovered in the carbonation step and the concentration-crystallization step of the carbonation mother liquor, so that the yield of lithium obtained as a product, lithium hydroxide, can be further enhanced.

The lithium-containing solid content obtained from the solid-liquid separation step of the carbonation step and concentration step of the carbonation reaction mother liquor in the present invention is regenerated as an aqueous lithium sulfate solution by adding sulfuric acid prepared so as not to cause new contamination of impurities. It is possible to use freshly prepared high-purity sulfuric acid for this step, however, it is preferable to use the sulfuric acid generated in the electrochemical membrane separation step comprised in the present invention, with its concentration adjusted as needed.

By understanding the following features, differences between the technology disclosed by the present invention and the prior art will be clarified.

To the best of the inventor's knowledge, there is no known technique where a solid content of lithium-containing carbonate compound is produced by using carbon dioxide gas and lithium hydroxide which is derived from lithium sulfate as the raw material, and this solid content of lithium-containing carbonate compound is further converted to a sulfate solution by using sulfuric acid and directly returned to the step of producing lithium hydroxide for reuse. However, what is meant by the word "directly" here is that the aqueous solution obtained by sulfation is used for the production of lithium hydroxide in the electrochemical membrane separation step with a lithium sulfate raw material aqueous solution newly supplied as a raw material for the membrane separation step, without chemically removing impurities in an additional step prior to the production of lithium hydroxide.

When producing high-purity lithium carbonate from lithium hydroxide using conventional technology, it is necessary to obtain low impurity lithium hydroxide crystals by lithium hydroxide crystallization in advance, the obtained lithium hydroxide crystals are dissolved into water again, and the carbonation reaction thereto is conducted. This is because the ratio of the alkali metal impurities that can be removed by the carbonation reaction from the lithium hydroxide solution in which the alkali metal impurities are dissolved at a high concentration is not sufficient. Therefore, it is clear that there is a decisive difference in the properties of lithium hydroxide to be handled in the carbonation reaction used in the present invention. That is, in the conventional method for producing high-purity lithium carbonate, the crystals obtained by lithium hydroxide crystallization are dissolved again and used as a raw material for the carbonation reaction. On the other hand, in the present invention, there is a great difference that the crystallization mother liquor in which impurities are concentrated by lithium hydroxide crystallization, is used as a raw material for the carbonation reaction.

In the prior art, when lithium carbonate is recovered as a final product from the mother liquor of lithium hydroxide crystallization, in order to use this lithium carbonate as a raw material in other steps, it is preferred to reduce the alkali metal impurity concentration contained in this lithium carbonate. Therefore, in order to obtain high-grade lithium carbonate with reduced impurities, the impurities contained in lithium carbonate should be diluted with lithium as much as possible. Namely, it is required to increase the proportion of lithium fed ("blown") from lithium hydroxide crystallization step to the carbonation step, or reduce the proportion of lithium hydroxide aqueous solution fed to lithium hydroxide crystallization step while increasing the proportion of lithium hydroxide aqueous solution fed to the carbonation step, or dissolve again the crystals obtained by the crystallization step used of a raw material of the carbonation step. Therefore, the yield of lithium hydroxide as a final product is inevitably lowered.

On the other hand, the process disclosed in the present invention is specialized to improving the yield of lithium hydroxide, so that it is not necessary to obtain high-purity lithium carbonate. Therefore, it is completely different from the method of simultaneously producing lithium and lithium carbonate in the prior art.

Thus, in a first aspect of the present invention, there is provided a process for producing lithium hydroxide from lithium sulfate as a starting material containing at least one of sodium and potassium as impurities, which process comprises the following steps of (A) to (F):
(A) a production step of an aqueous lithium hydroxide solution and sulfuric acid by an electrochemical membrane separation method using lithium sulfate as a raw material;
(B) a crystallization step producing a lithium hydroxide crystal by crystallization using the obtained aqueous lithium hydroxide solution in the above electrochemical membrane separation step as a raw material;
(C) a solid-liquid separation step in which a portion of slurry in the above crystallization step is discharged and is subjected to solid-liquid separation to separate a lithium hydroxide crystal and crystallization mother liquor, and thereafter a washing step to clean the separated solid content;
(D) a carbonation step obtaining a slurry comprising a lithium-containing carbonate compound as a solid content by discharging a portion of crystallization mother liquor in said crystallization step and reacting said discharged crystallization mother liquor with carbon dioxide gas, and a solid-liquid separation step separating said slurry into a lithium-containing solid content and a liquid content;
(E) an acid dissolution step producing a lithium sulfate aqueous solution by reacting said lithium-containing solid content with sulfuric acid;
(F) a mixing step reusing the lithium sulfate aqueous solution obtained by said acid dissolution step as the raw material of said step of (A).

In a second aspect of the present invention, there is provided the process for producing lithium hydroxide according to the first aspect, further comprising the following step (G),
(G) a carbonate concentration-crystallization step obtaining a slurry by subjecting said liquid content obtained from said carbonation step and from said solid-liquid separation step in said step (D) to concentration-crystallization and a solid-liquid separation step separating the obtained slurry into a lithium-containing solid content and a liquid content,
wherein an operation so as to feed the obtained solid content in the said solid-liquid separation step to the above step (E) is further included.

In a third aspect of the present invention, there is provided the process for producing lithium hydroxide according to aspect 1 or 2, further comprising the following step (H) comprising:
- an aqueous sulfate solution production step by adding sulfuric acid to the liquid content obtained by the carbonate concentration-crystallization step and solid-liquid separation step in said step (G),
- a sulfate concentration-crystallization step by concentration-crystallization of the obtained sulfate solution to obtain a slurry, and
- a solid-liquid separation step to separate the obtained slurry to a solid content and liquid content,
wherein an operation of feeding the liquid content obtained by the said solid-liquid separation process to the above step (E) or step (F) is further included.

In a fourth aspect of the present invention, there is provided the process for producing lithium hydroxide according to any one of aspects 1 to 3, further comprising washing step(s) as a step conducted in said solid-liquid separation step or as a step conducted after solid-liquid separation to any or all of solid content(s) obtained in said carbonation and solid-liquid separation steps in said step (D), obtained in said carbonate concentration-crystallization and solid-liquid separation steps in said step (G), and obtained in said sulfate concentration-crystallization and solid-liquid separation steps in the above step (H).

In a fifth aspect of the present invention, there is provided the process for producing lithium hydroxide according to any one of claims 1 to 4, further comprising an operation feeding a part or all of the washing filtrate obtained in the washing step according to the claim 4 into said step (E).

In a sixth aspect of the present invention, there is provided the process for producing lithium hydroxide according to any one of claims 1 to 5, wherein said electrochemical membrane separation method process in said step (A) is an electrodialysis method.

In a seventh aspect of the present invention, there is provided the process for producing lithium hydroxide according to any one of claims 1 to 6, further comprising:
(I) a re-dissolving step of re-dissolving the lithium hydroxide crystals in the crystallization step (B) in an aqueous medium,
(J) a re-crystallization step producing lithium hydroxide crystals by further crystallization a second lithium hydroxide crystallization step), and
(K) a re-solid-liquid separation step of separating the slurry obtained in the re-crystallization step into lithium hydroxide crystals and a crystallization mother liquor, and washing step of cleaning the said solid content; further comprising an operation supplying the crystallization mother liquor obtained in the re-solid-liquid separation to the crystallization step (B) and/or to the carbonation step (D) and the re-crystallization step (J).

### ADVANTAGEOUS EFFECTS OF INVENTION

The present invention has the following features. The present invention discloses a technique for effectively separating, recovering and recycling lithium, which is discharged together with highly concentrated alkali metal impurities as a lithium hydroxide crystallization mother liquor. By this technique, it is possible to significantly improve the yield of lithium hydroxide obtained as the final product.

In the present invention, as a means for efficiently recovering lithium contained in the mother liquor of the carbonation step, there are disclosed a concentration-crystallization method of the carbonation mother liquor and a method using sulfation and sulfate concentration-crystallization of the concentrated carbonation mother liquor. By these techniques, not only it is possible to further enhance the lithium recycle rate and to further enhance the yield of lithium hydroxide, but also it is possible to produce a mixture of sodium sulfate and potassium sulfate with significantly reduced lithium, so that it is possible to effectively use not only lithium but also sodium and potassium as alkali metal resource values.

According to the present invention, in the process of producing high-purity lithium hydroxide, only carbonic acid and sulfuric acid are used to remove alkali metal impurities, and carbonates and sulfates derived from alkali metals contained in the raw material are only discharged as by-products containing alkali metals, so that it is possible to treat a very small amount of waste. In addition, the method of the present invention is different from conventional methods using sodium carbonate so as to obtain lithium carbonate or sodium carbonate as a pH adjuster. Namely, the method of the present invention is characterized in that there is no need to introduce alkali metals into the system other than the alkali metals supplied from the aqueous raw material solution, so that the amount of alkali metals discharged to outside the system as waste can be greatly reduced, thereby realizing a reduction in the amount of waste to be treated.

The process according to the present invention uses carbon dioxide gas to obtain the solid content of the lithium carbonate compound and is different from any conventional process using sodium carbonate to produce lithium carbonate. Thereby, in the present invention, since contamination by sodium adhered or adsorbed to the solid content of the lithium carbonate compound can be maintained at low levels so that the amount of alkali metal impurities entrained in the lithium recycled into the system can be controlled with minimal cleaning (washing). The carbonation step, the concentrated-crystallization step of the carbonated mother liquor and the solid-liquid separation step and cleaning (washing) step associated with the subsequent sulfate concentration-crystallization step according to the present invention have not only the function of recovering lithium, but also the function of discharging metal impurities out of the system. Therefore, it is possible to reduce the number of overall steps, and the form and amount of waste produced can be controlled only by adjusting the number of crystallization steps and the degree of cleaning of the solid content.

The present invention, which has the features described above, greatly improves the yield of lithium hydroxide, makes it possible to realize the minimum number of steps and the minimum amount of waste generated, and attain the effect of greatly improving the cost performance of the lithium hydroxide production.

### BRIEF DESCRIPTION OF DRAWINGS

[Fig. 1] Fig. 1 is a process flow diagram illustrating an embodiment of the present invention.
[Fig. 2] FIG. 2 is a process flow diagram illustrating a mode of carrying out the present invention including the function of a crude purification step.

### DESCRIPTION OF EMBODIMENTS

In the following, practically possible embodiments according to the invention are described in more detail. However, these embodiments are only illustrative, and the structure of the unit operations constituting the actual step is not limited to these embodiments. A person skilled in the art can properly change the structure without departing from the scope of the present invention.

Moreover, each of the steps described below can be carried out by batch-type, continuous-type, or semi-batch-type operation as required. A person skilled in the art who performs the present invention can appropriately select an operation method, such as operating a certain step by batch-type operation and operating another process by continuous-type operation, while considering the balance of facility capacity.

As the lithium sulfate aqueous solution, one obtained by eluting lithium by acid leaching, one obtained by dissolving lithium sulfate crystals, or the like is appropriately selected and used. Further, as described below, the lithium sulfate aqueous solution obtained in the acid dissolution step of reacting the lithium-containing solid content with sulfuric acid is mixed and used as a raw material in the electrochemical membrane separation step.

Impurities such as polyvalent metal ions contained in the lithium sulfate aqueous solution raw material are preferably removed by a known method. Moreover, when an insoluble component is contained, it is preferable to filter and separate it by a known method. In the present invention, Na and/or K are contained as impurities. These impurities have an Na/Li weight ratio of less than 3.3, more preferably less than 0.70, more preferably less than 0.11, and a K/Li weight ratio of less than 5.6, more preferably less than 2.0, and even more preferably less than 0.21. This is because, when the amount of impurities exceeds Na/Li = 3.3 or K/Li = 5.6, more than half of the alkali metal in the alkaline aqueous solution produced in the electrochemical membrane separation step is derived from impurities, so that the energy utilization efficiency decreases. However, as described later, the amount of impurities contained in the aqueous solution of lithium sulfate as the starting material, is not limited to the above if it is operated in a process including a crude purification step.

The aqueous lithium sulfate solution thus prepared is used as a raw material for (A) an electrochemical membrane separation step, particularly an electrodialysis step, to produce an aqueous lithium hydroxide solution and sulfuric acid. The sulfuric acid obtained in this step can be used for the reaction with the lithium-containing carbonate compound after appropriately adjusting the concentration such as a concentration operation. Moreover, the sulfuric acid obtained in this step may be used as a raw material of another steps.

When electrodialysis is used as an electrochemical membrane separation step, the temperature of the salt solution is preferably kept not higher than 40°C, more preferably between 10 and 30°C. When the salt solution temperature exceeds 40°C, in general electrodialyzers, not only there is a possibility of disadvantage in the life of membranes and components, but also there is a possibility of airtightness reduction of the membrane stack due to distortion by differences in the coefficient of thermal expansion of the components. Naturally, this is not a case using equipment designed to allow high temperature operation.

The lithium hydroxide aqueous solution obtained in the electrochemical membrane separation step is used as a raw material in the crystallization step. Separation membranes used in electrodialysis and compartmental electrolysis have selectivity to the valence of ions, and cannot separate the same alkali metals such as lithium, sodium and potassium. If sodium or potassium is mixed in the lithium aqueous solution as the raw material, sodium and potassium are not selectively separated and transferred as they are into the lithium hydroxide aqueous solution produced in this step

The lithium hydroxide aqueous solution thus obtained is subjected to (B) crystallization to obtain crystals of lithium hydroxide, particularly concentration-crystallization, by a known method. Evaporative crystallization accompanied by evaporation of the solvent water is preferably applied to the concentration-crystallization. When such evaporative crystallization is applied, the temperature of the evaporator is preferably kept at 60°C or higher, more preferably kept constant between 70 and 100°C. Such evaporative crystallization can be carried out even when the temperature of the evaporator is less than 60°C, but there is a problem that the production efficiency is reduced.

Alternatively, instead of carrying out such concentration-crystallization, it is also possible to obtain lithium hydroxide crystals as a product by such a manner that the lithium hydroxide aqueous solution obtained from the electrochemical membrane separation process is concentrated to the extent that crystals do not precipitate, and high-purity crystals are obtained from this concentrated solution by cooling crystallization. Therefore, in the present invention, concentration-crystallization includes not only an operation of simultaneously forming lithium hydroxide crystals while removing water as a solvent, but also an operation of performing concentration and cooling crystallization in combination.

The lithium hydroxide slurry obtained in this crystallization step is subjected to solid-liquid separation and cleaning (washing) by (C) extracting part of the slurry into lithium hydroxide crystals and crystallization mother liquor by a known method. A centrifugal separator is generally used for the solid-liquid separation operation, but other methods may be employed. The washing operation may be performed in the same apparatus as the solid-liquid separation operation, or may be performed by passing cleaning water through the solid content as a separate step after the solid-liquid separation. Further, even within the same apparatus, the apparatus may be provided with a mechanism for separately recovering liquid contents generated by solid-liquid separation and cleaning (washing). The embodiment carrying out the solid-liquid separation of the crystallization slurry and the cleaning (washing) of the obtained solids may be appropriately selected according to the steps in which the solid-liquid separation filtrate and cleaning (washing) filtrate are to be reused.

For example, both the filtrate obtained by the solid-liquid separation of the crystallization slurry and the washing filtrate generated in the subsequent cleaning operation can be returned to the lithium hydroxide crystallization step described above. It is more efficient to introduce a part or the whole of the filtrate obtained in the filtrate obtained by the solid-liquid separation of the crystallization slurry to the subsequent carbonation step in view of operation.

The weight ratio of Na/Li and K/Li of the high-purity lithium hydroxide as a final product thus obtained is less than 1.2×10⁻³, more preferably less than 3.0×10⁻⁴ and more preferably less than 1.2×10⁻⁴. When the weight ratio of Na/Li and K/Li in high-purity lithium hydroxide is 1.2×10⁻³ or more, the content of alkali metal impurities exceeds 200 ppm, so that there is a problem that it is not suitable for the production of battery material using lithium hydroxide as a raw material or the amount that can be used is limited.

The amount of slurry extracted from the lithium hydroxide crystallization step may be appropriately selected within a permissible range for continuous conducting of this crystallization operation. If lithium hydroxide crystallization is to be carried out in a continuous manner, the amount of lithium contained in the lithium hydroxide crystals contained in the extracted slurry during steady operation and recovered as a product can be adjusted by such way. Namely, considering the amount of lithium contained in the lithium sulfate aqueous solution newly introduced into the system as a raw material and the yield of lithium hydroxide, the extraction amount is controlled by such a manner that the fluctuation of the amount of lithium retained in the system is within 20% per hour, preferably within 10% per hour, and/or the amount of lithium retained in the system is constant value as an average value. If lithium hydroxide crystallization is performed in a semi-batch manner, the amount of lithium contained in the crystals in the extracted slurry will be temporarily greater than the amount of lithium newly introduced into the system. In this case, the withdrawal amount is controlled so that the average amount of crystals removed during continuous operation keeps the amount of lithium retained in the system within a substantially constant range (preferably within a constant range as the average value of semi-batch operation cycles).

In the above lithium hydroxide crystallization, a part of the crystallization mother liquor is extracted and used as a raw material for the subsequent carbonation step. The Na/Li weight ratio of the mother liquor is less than 0.57, preferably less than 0.29, more preferably less than 0.12, and the K/Li weight ratio is less than 1.6, preferably less than 0.80, more preferably less than 0.32. When the weight ratio of Na/Li is 0.57 or more or the weight ratio of K/Li is 1.6 or more, there is a high possibility that the impurity content of Na and K contained in the lithium hydroxide crystal obtained as a product exceeds 100 to 200 ppm, so that it may be difficult to produce high-purity lithium hydroxide. However, if the present invention is performed including the crude purification step as described later, the impurity content of the mother liquor is not limited to this. Any known method can be used to extract the mother liquor. As described above, the liquid obtained during solid-liquid separation of the lithium hydroxide crystals of the product may be used. Or a portion that is not affected by stirring is formed in the crystallizer and the mother liquor may be taken out of the crystallizer by sedimentation as a supernatant liquid.

The amount of the mother liquor withdrawn depends on the Na/Li and K/Li weight ratios of the lithium hydroxide aqueous solution flowing into the lithium hydroxide crystallization step and the purity required for the lithium hydroxide crystals obtained as a final product. It is extremely important in the present invention to recover lithium as a solid or liquid from the extracted mother liquor and to convert it to a sulfate and recycle it. That is, the Na/Li and K/Li weight ratios of the impurities contained in the recycled lithium are smaller than those of the lithium hydroxide crystallization mother liquor, and more preferably smaller than those of the raw material aqueous solution. Thereby, when a sufficient amount of recycled lithium in the form of an aqueous sodium hydroxide solution, which is mixed with the raw material introduced into the system and treated through the electrochemical membrane separation step, flows into the lithium hydroxide crystallization step, hydroxylation Provides a dilution effect which acts to reduce the Na/Li and K/Li weight ratios of the lithium crystallization mother liquor can be attained. Therefore, it is possible to allow a certain amount of alkali metal impurities to be mixed in the lithium to be recycled as long as the amount of mixing does not impair this dilution effect, and it can be achieved to continuously enhance the yield as lithium hydroxide as possible.

The lithium hydroxide solution used as a raw material in the carbonation step is preferably used after adjusting its concentration so that the operation in the carbonation step can be easily performed. This is because, depending on the form of the reactor, the solid content produced by the reaction between carbon dioxide and lithium hydroxide may clog the raw material introduction nozzle. On the other hand, in order to reduce the total amount of dissolved lithium after the carbonation reaction, it is preferable to increase the concentration of the lithium hydroxide solution to be subjected to the carbonation step as much as possible. Taking these factors into consideration, the concentration of the lithium hydroxide aqueous solution used in the carbonation step may be appropriately selected. A part of the mother liquor in the carbonation step may be used for adjusting the concentration of the lithium hydroxide aqueous solution. When the method of injecting carbon dioxide gas into the lithium hydroxide aqueous solution is employed, the concentration of the lithium hydroxide aqueous solution is preferably 4 to 8% by weight. When the carbonation reaction is carried out at a concentration exceeding this concentration range, it is advisable to appropriately check whether the tip of the nozzle for blowing carbon dioxide gas is clogged, and replace or clean the tip of the clogged nozzle as necessary.

From the above, (D) the carbonation step is carried out to produce a lithium-containing carbonate compound by reacting the mother liquor extracted from the lithium hydroxide crystallization step with carbon dioxide. Then, the obtained slurry is subjected to solid-liquid separation by a known method.

The carbonation step may be carried out by a known gas-solid contact reaction method. For example, a reaction vessel may be filled with a certain amount of the above extracted mother liquor, and carbon dioxide gas may be injected thereinto to cause the reaction. Also, a reaction mode such as a packed tower in which a packing material such as a Raschig ring is placed in the tower, or an absorption tower using a spray or a shower may be employed, or these may be employed in combination. The concentration of carbon dioxide gas used in the reaction can be varied according to the gas-solid contacting process employed. Carbon dioxide gas may be diluted with nitrogen gas as in the examples described later. If the gas-solid contacting step can tolerate higher gas flow rates, normal air may be introduced into the carbonation step with suitable pretreatment (such as removal of suspended solids). The carbon dioxide-consumed air obtained in this manner can be used in another step or in a subsequent step.

Regardless of which reaction mode conducting the carbonation step, in the process of removing the solid content, it is preferable to control the amount of carbon dioxide to be reacted with lithium in an amount equivalent to the amount of lithium to be subjected to the reaction, or 90% or more of the equivalent amount. This is because if the reaction between lithium hydroxide and carbon dioxide is insufficient, the amount of lithium that can be recovered as a solid content in the carbonation step decreases.

This carbonation reaction is preferably carried out in a temperature range of 60°C or higher. Since the higher the reaction temperature, the higher the solubility of lithium hydroxide and the lower the solubility of lithium carbonate, this carbonation reaction is preferably carried out in a temperature range of 70 to 90°C. Since the reaction of lithium hydroxide aqueous solution with carbon dioxide gas is an exothermic reaction, this reaction heat may be used to maintain the liquid temperature. If the temperature of the carbonation reaction is lower than 60°C, the solubility of lithium carbonate increases and there is a problem that the yield of lithium recovered and reused as a solid content decreases or that the loads on the concentration-crystallization step and sulfate concentration-crystallization step increase.

The solid content obtained in the above carbonation step mainly comprises lithium carbonate, but may contain lithium hydrogen carbonate and crystal water. In addition, reaction mother liquor and cleaning water may adhere thereto. In the prior art, since the carbonation step is a purification step, it is not a preferred embodiment that the solid content of lithium contains components other than lithium carbonate. On the other hand, the present invention is greatly different from the prior art in the feature that it is sufficient to separate lithium from the other alkali metal impurity elements by the carbonation reaction. This is because the solid content is processed in the acid dissolution step described later, and the amount of lithium recycled into the system is particularly important. The Na/Li weight ratio of the solid content obtained here is 60% or less, preferably 40% or less, more preferably 20% or less of the Na/Li weight ratio of the lithium hydroxide crystallization mother liquor. Similarly, the K/Li weight ratio of the lithium hydroxide crystallization mother liquor is 60% or less, preferably 40% or less, more preferably 20% of the K/Li weight ratio of the lithium hydroxide crystallization mother liquor. When the Na/Li or K/Li weight ratio of the solid content exceeds 60% of the Na/Li or K/Li weight ratio of the lithium hydroxide crystallization mother liquor, the amount of Na or K returned to the system increases and this is disadvantageous for the production of high-purity lithium hydroxide. Therefore, for example, in a case of reaction at 75°C, the endpoint pH of the carbonation reaction may be lowered to 8.3 to 9.0 at which the amount of lithium hydrogen carbonate begins to increase. If the carbonate concentration-crystallization step described below or the sulfate concentration-crystallization step described below is additionally performed, the end point pH of the carbonation step may be set in the range of 7.5 to 9.5. The slurry produced in this carbonation step is subjected to a solid-liquid separation operation by a known method, and the solid content can be washed with water or hot water if necessary.

In addition, it is also a feature of the present invention that the impurity separation step(s) disclosed in the present invention (that is, the carbonation step, and the carbonate concentration-crystallization step and sulfate concentration-crystallization step described below) is/are performed after the lithium hydroxide crystallization step and performed before the recycled lithium is mixed into the raw material aqueous solution. That is, the lithium hydroxide crystallization step not only obtains purified lithium hydroxide crystals, but also has a concentration function of impurities. Therefore, the required level of impurity removal can be achieved by introducing only a part of lithium into impurity separation step and lithium recovery step. Therefore, lithium corresponding to the total amount of lithium hydroxide obtained as a product does not need to be subjected to the impurity removal step, so that the scale of steps required for impurity removal can be greatly reduced.

A large amount of lithium is dissolved in the liquid content obtained by the solid-liquid separation after the carbonation step. If the carbonation reaction is sufficiently performed, a corresponding amount such as 10 to 20% of lithium introduced into the carbonation step is usually dissolved. It is considered that not only the dissolution of lithium carbonate generated by the carbonation reaction but also the dissolution of lithium hydrogen carbonate contributes to the dissolved lithium. The liquid content has an Na/Li weight ratio of less than 9.0, preferably less than 5.0, and a K/Li weight ratio of less than 20, preferably less than 12. When the Na/Li weight ratio of the liquid content is 9.0 or more, or when the K/Li weight ratio of the liquid content is 20 or more, there is a problem to easily precipitate sodium and potassium together with lithium as carbonate compounds in the carbonate concentration-crystallization step described later.

By subjecting this liquid to a concentration-crystallization operation, lithium can be further recovered as a solid content of the lithium-containing carbonate compound. In the present invention, this step is defined as (G) carbonate concentration-crystallization step. The slurry obtained in the carbonate concentration-crystallization step is subjected to an solid-liquid separation operation.

This carbonate concentration-crystallization is preferably carried out by an evaporative crystallization with either heating or reduced pressure, or a combination of both. In particular, in a condition where dissolved lithium derived from lithium hydrogen carbonate is present, the decomposition of lithium hydrogen carbonate can be promoted by heating, and the amount of lithium recovered as lithium carbonate can be increased to increase the yield of lithium. This evaporative crystallization is preferably carried out in a temperature range of 60°C or higher, more preferably in a temperature range of 70 to 90°C. If the temperature for the evaporative crystallization is lower than 60°C, there are problems such as a decrease in productivity due to a decrease in evaporation rate and a difficulty in progressing the decomposition of lithium hydrogen carbonate. Also, in order to save the energy required for the concentration, a concentration operation by membrane separation can be combined. The slurry thus obtained is subjected to a solid-liquid separation operation by a known method to obtain a lithium-containing solid content as a solid content. This solid content can be washed with water or hot water if necessary. The Na/Li weight ratio of the solid content is 60% or less, preferably 40% or less, more preferably 20% or less of the Na/Li weight ratio of the lithium hydroxide crystallization mother liquor. Similarly, the K/Li weight ratio of the solid content is 60% or less, preferably 40% or less, more preferably 20% or less of the K/Li weight ratio of the lithium hydroxide crystallization mother liquor. When the Na/Li or K/Li weight ratio of the solid content exceeds 60% of the Na/Li or K/Li weight ratio of the lithium hydroxide crystallization mother liquor, the amount of Na or K returned to the system increases and this is disadvantageous for the production of high-purity lithium hydroxide.

The lithium-containing solid content produced and separated in the carbonation step and the carbonate concentration-crystallization step is used as a raw material in the acid dissolution step (E). In this step, the lithium-containing solid content obtained in the previous steps is decomposed with sulfuric acid to produce an aqueous solution containing lithium sulfate as a main component. The sulfuric acid used in this step may be freshly purchased, but it is more preferable to use the sulfuric acid produced together with lithium hydroxide in the electrochemical membrane separation step. By the use of sulfuric acid generated in the electrochemical membrane separation step, it can be prevented to mix with impurities from outside the system. The amount of sulfuric acid used in this operation can be adjusted as appropriate. Especially when electrodialysis is employed as the electrochemical membrane separation step, the amount used is preferably adjusted such that the pH of the lithium sulfate solution is 4 or less. Further, in order to adjust the concentration of this lithium sulfate aqueous solution, a low-concentration salt solution (low-concentration lithium sulfate aqueous solution) obtained in the electrochemical membrane separation step can be added.

When the lithium-containing solid content is decomposed in the acid dissolution step, carbon dioxide gas is generated. This generated gas can be recovered and reused in the carbonation process. Since the reaction between the lithium-containing solids and sulfuric acid rapidly generates carbon dioxide gas, it is preferable to design the reaction vessel so as to be able to cope with pressure changes. In order to mitigate pressure changes, there is a cushioning mechanism that provides a large space above the reaction vessel, a mechanism that protects the reaction vessel from a sudden pressure rise by equipping a pressure relief valve, and a blower that is used to exhaust air while operating in a decompressed state. In order to control the amount of carbon dioxide gas generated, it is preferable to equip mechanisms such as a mechanism for gradually adding lithium-containing solids to a solution containing a predetermined amount of sulfuric acid, or a mechanism for gradually adding sulfuric acid to lithium-containing solids, or a mechanism in combination thereof.

The lithium sulfate aqueous solution obtained in the acid dissolution step is reused through (F) a step of mixing with the lithium sulfate aqueous solution supplied as a raw material for the electrochemical membrane separation step, thereby one embodiment of processing cycle disclosed in the present invention is completed. The Na/Li weight ratio of the lithium sulfate aqueous solution to be reused is 60% or less, preferably 40% or less, more preferably 20% or less of the Na /Li weight ratio of the lithium hydroxide crystallization mother liquor. The K/Li weight ratio of the lithium sulfate aqueous solution to be reused is 60 % or less, preferably 40% or less, more preferably 20% or less of the K/Li weight ratio of the lithium hydroxide crystallization mother liquor. If the weight ratio of Na/Li or the weight ratio of K/Li in the lithium sulfate aqueous solution to be reused exceeds 60%, the amount of Na and K returned to the system increases, so that there is a problem that the production of high-purity lithium hydroxide becomes difficult.

Sulfuric acid is added to the liquid remaining after the carbonate concentration-crystallization step and the subsequent solid-liquid separation step to convert it into an aqueous sulfate solution. By conducting the concentration-crystallization, it can be to separate sodium and potassium from lithium and lithium can be recovered as a liquid content after solid-liquid separation. In the present invention, this step is defined as (H) sulfate concentration-crystallization step. The slurry obtained in this step is subjected to a solid-liquid separation operation.

This sulfate concentration-crystallization is preferably carried out by evaporative crystallization with either heating or depressurization, or a combination of both. In this case, crystallization is preferably carried out in a temperature range of 60°C or higher, more preferably in a temperature range of 70 to 90°C. In order to save energy required for concentration, a concentration operation by membrane separation can be combined. The slurry thus obtained is subjected to a solid-liquid separation operation by a known method, and most of the lithium is recovered as a liquid content. The amount of Na contained in this liquid content is 50% or less, preferably 30% or less, more preferably 20% or less of the amount of Na contained in the mother liquor blown from the lithium hydroxide crystallization step. As to the amount of K therein, the same amount range can be applied. If the amount of Na or K contained in this liquid content exceeds 50% of the amount of Na contained in the mother liquor blown from the lithium hydroxide crystallization step, the amount of Na or K returned to the system increases and this is disadvantageous for the production of high-purity lithium hydroxide. When adjusting the concentration or pH of the aqueous sulfate solution in the acid dissolution step, the liquid content separated and recovered by the sulfate concentration-crystallization can be mixed.

The solid content obtained by the sulfate concentration-crystallization and the subsequent solid-liquid separation operation can be washed with water or cold water, if necessary. When sodium and potassium are the major impurities, by the cleaning operation, sodium sulfate, or potassium sulfate, or a double salt of sodium sulfate and potassium sulfate, or a mixture thereof, which has been greatly reduced in lithium content, are left as solids. The Li content of this solid content is less than 500 ppm, preferably less than 100 ppm. Because of the low lithium content, this solid content can be used as a raw material in other steps using known techniques for alkali raw materials.

In the carbonation step and the carbonate concentration-crystallization step, it is important to recover preferably 70% or more, more preferably 80% or more, and even more preferably 90% of the lithium derived from the mother liquor blown from the lithium hydroxide crystallization step as a solid content, introduce it into the acid dissolution process to regenerate the lithium sulfate aqueous solution, and reuse it as a raw material for the electrochemical membrane separation process. This process not only improves the yield of lithium hydroxide obtained as a product, but also affects its purity. As seen from the prior arts, since the lithium-containing carbonate compound is discharged out of the system as lithium carbonate, not only the lithium yield as lithium hydroxide crystals is reduced, but also the recovery rate of crystal per unit amount of treated lithium in the lithium hydroxide crystallization step is reduced. Therefore, when the amount of lithium recovered as a solid content is less than 70%, there are problems that the yield of lithium is reduced and the production efficiency of high-purity lithium hydroxide deteriorated.

That is, by the above carbonation step, the carbonate concentration-crystallization step and the sulfate concentration-crystallization step which are optionally performed, lithium and alkali metal impurities such as sodium and potassium are separated, and most of the alkali metal impurities are discharged out of the system. Therefore, the sodium/lithium ratio and the potassium/lithium ratio of the lithium sulfate aqueous solution regenerated in the acid dissolution step through these steps are greatly reduced through these steps. When the lithium sulfate aqueous solution with reduced impurity content is regenerated and reused as a raw material in the electrochemical membrane separation step and further reused in the lithium hydroxide crystallization step, by the recycled lithium, there can be attained an effect of diluting the impurities concentrated in the lithium hydroxide crystallization mother liquor.

It is known that the amount of impurities contained in lithium hydroxide crystals obtained by crystallization operation is approximately proportional to the impurity concentration relative to lithium in the crystallization mother liquor. Accordingly, if the impurity concentration in the crystallization mother liquor is decreased, it works favorably for the purification of lithium hydroxide obtained as crystals. Therefore, the blow rate in lithium hydroxide crystallization can be controlled within a realistic and appropriate range, so that the recovery rate of lithium hydroxide crystals per throughput can be improved.

That is, in the present invention, since the carbonation reaction is conducted as a separation operation between lithium and alkali metal impurities, not only the yield of lithium hydroxide crystals as a final product is simply increased by reusing the lithium-containing solid content as a lithium raw material, but also the facility utilization efficiency of lithium hydroxide crystallization is improved.

Once the characteristics of the carbonation step disclosed by the present invention are understood, the cleaning operation is not essential in the above carbonation step and the following carbonate concentration-crystallization step and the sulfate concentration-crystallization step, and the cleaning operation may be applied while properly adjusting the degree of cleaning or the cleaning operation itself may not be necessary. For example, for the solid content obtained in the carbonation step, a small amount of water is used to wash away most of the alkali metal impurities so that the yield of the lithium-containing carbonate compound is not significantly reduced, and the cleaning operation may not be conducted after separating and recovering the solid content obtained in the carbonate concentration-crystallization step followed thereby. Further, when the solid content obtained in the sulfate concentration-crystallization step is washed, the cleaning filtrate can be recycled into the system or can be discharged out of the system.

In this way, by conducting cleaning operation or no cleaning operation in the carbonation step, carbonate concentration-crystallization step and sulfate concentration-crystallization step, and by adjusting the amount of cleaning liquid, it is possible to select the composition of alkali metal impurities discharged outside the system whether carbonates or sulfates and is possible to control the ratio of alkali metal impurities contained therein to the raw material aqueous solution content.

In the present invention, high-purity lithium hydroxide with reduced Na and/or K content can be obtained. High purity in the present invention is defined as the content of Na or K of less than 200 ppm, preferably less than 50 ppm, more preferably less than 20 ppm. In the present invention, high-purity lithium hydroxide that satisfies this Na and/or K content can be obtained in a high yield. Here, the term "high yield" is defined that 70% or more, preferably 90% or more of the lithium contained in the raw material lithium sulfate is converted into lithium hydroxide crystals.

### EXAMPLES

Hereinafter, the present invention will be described in more detail by showing Examples relating to the lithium separation and recovery step after the carbonation step. In order to explain the effects of the present invention, an explanation form is used in which the results of experiments are confirmed by simulation under conditions where a certain value can be obtained as the content of impurities contained in lithium hydroxide crystals. However, these values are merely set for convenience only and it is not intended to restrict the practicable conditions in the present invention. In carrying out the present invention, the target impurity concentration and operating parameters may be appropriately optimized.

In the present invention, the notations of Na/Li and K/Li are used to indicate the relative contents of sodium and potassium as impurities with respect to lithium. The weight ratio of these elements is indicated unless otherwise specified.

Analytical methods used in Examples are shown below. The amounts of alkali metals in the raw material aqueous solution, crystallization mother liquor and crystals were measured using an ICP atomic emission spectrometer iCAP PRO XP Duo (manufactured by Thermo Fisher Scientific Inc.). A pH meter HM-30P (manufactured by DKK-Toa Corporation) was used for pH measurement during the reaction.

It is well known that lithium hydroxide crystallization reduces the amount of impurities contained in lithium hydroxide obtained as crystals. It is known that the amount of this impurity is proportional to the concentration in the mother liquor, and a relational expression is obtained as the distribution ratio, which is expressed by the following formula (the distribution ratio D is a dimensionless value). Distribution ratio D = (Impurities content in the crystals/Lithium content in the crystals) / (Impurities content in the crystallization mother liquor/Lithium content in the crystallization mother liquor)

Based on preliminary investigations, lithium hydroxide crystallization was studied under the conditions of Na/Li=0.20 and K/Li=0.087, and distribution ratios for sodium and potassium were 1.05×10⁻³ and 3.80×10⁻⁴ were determined respectively.

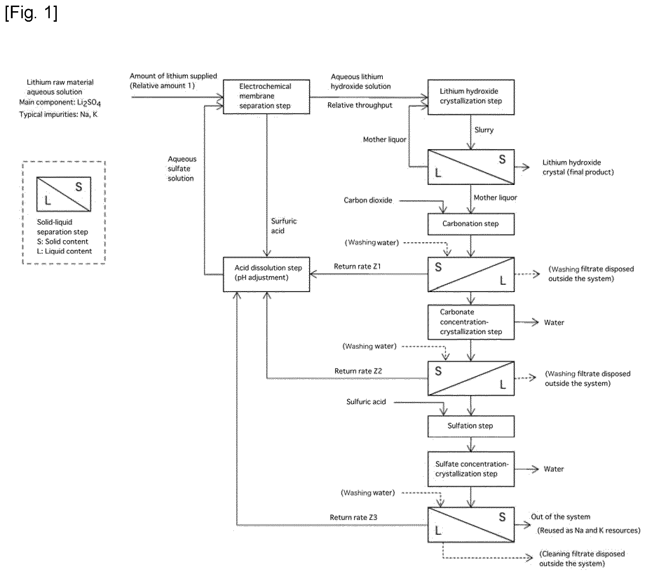

Assuming the flow chart shown in FIG. 1 as an example of embodiment of the present invention, the characteristic values for determining the ability derived from the steps configured like this flow chart were determined by the experiments exemplified below. A material balance-based simulation was performed based on these characteristic values.

The "return ratio (represented by the symbol Z)" in the present invention means a ratio of element separated and recovered from the lithium hydroxide crystallization mother liquor and the recycled through the process(es) including at least the carbonation process and means a ratio based on the element amount flown into the lithium hydroxide crystallization step. Z1 means a ratio recovered as solids in the carbonation step. Z2 means a ratio recovered as solids by carbonate concentration-crystallization. Z3 means a ratio recovered in the liquid content obtained by sulfate concentration-crystallization. Depending on the recovery process applied, the return ratio Z is calculated as the sum of Z1 to Z3.

In addition, the "relative throughput" in the present invention is defined as the amount of lithium per hour in the steady operation flowing into the lithium hydroxide crystallization through the electrochemical membrane separation step, provided that the amount of lithium supplied per time contained in the raw material aqueous solution is set to 1.

In the explanations below, in order to make it easier to understand the differences in numbers, lithium is expressed in 3 digits, and sodium and potassium are expressed in 2 digits (providing that important values as the set values and results are expressed in 3 to 4 digits), and all of them were treated as double-precision numerical values in carrying out the simulation.

### Example 1 :

### (Return ratio of lithium and alkali metal impurities by carbonation reaction)

Lithium hydroxide, sodium hydroxide, and potassium hydroxide reagents were dissolved in water to prepare a simulated lithium hydroxide crystallization mother liquor, so that Na/Li = 0.083, K/Li = 0.11 and a total alkali concentration was 4.8 mol/L (a known acid-base titration). The prepared simulated mother liquor was placed in a 1 L stainless steel reaction vessel and heated to 75°C using a mantle heater. While stirring this solution using a turbine-type stirring blade, a mixed gas of nitrogen gas and carbon dioxide gas (0.5 NL/min and 1.2 NL/min, respectively) was injected to carry out a carbonation reaction. Since the initial lithium hydroxide concentration was high, it was observed that the tip of the gas injection nozzle was clogged with deposits. The tip of the nozzle was cleaned whenever blockage occurred. Such blockage disappeared as the reaction progressed. An exothermic heat was generated accompanying the carbonation reaction, and the solution temperature temporarily increased to 81°C. When the pH of the solution was lowered to 9.27 (79°C), the reaction was terminated. A solid-liquid separation operation was performed by vacuum filtration using Buchner funnel and a filter paper No. 5C (manufactured by Advantech Co., Ltd).

From the weight of the unwashed solid content and the filtrate (reaction crystallization mother liquor) and the results of ICP analysis thereof, lithium, sodium, and potassium subjected to the reaction as hydroxides were recovered in amounts of 92.1%, 7.8% and 8.8%, respectively as solids. If this solid content is introduced into the acid dissolution step, the return ratios Z of lithium, sodium, and potassium become Z=Z1 (refer to FIG. 1), which are 92.1%, 7.8% and 8.8%, respectively (Experiment No. 1A).

In addition, when the solid content was washed with about 100 g of warm water (80°C), the return ratios Z=Z1 were calculated from the weight and analysis results of the solid content and the cleaning filtrate, and the return ratios Z of lithium, sodium and potassium are 91.3%, 1.1% and 0.39%, respectively (Experiment No. 1B).

Based on these values, a material balance simulation was performed. When the supply amount of the lithium raw material aqueous solution is 1 per unit time, the amounts of lithium retained in the electrochemical membrane separation step, the lithium hydroxide crystallization step and the carbonation step are all set to 100. Assuming that these steps are operated in a continuous operation, the material balances in the respective steps were calculated. Successive calculation cycles were repeated until the values of Na/Li and K/Li in each step converge to a value from 99.9% to 100.1% (namely until steady operation) compared to the results of 1000 cycles before the calculation step.

The amount of impurities contained in lithium hydroxide crystals obtained as a final product is affected not only by the reversion ratio after the carbonation step, but also by the impurity content of the raw material aqueous solution and the blow rate in the lithium hydroxide crystallization step. Although various combinations can be considered for the amount of impurities in the raw material aqueous solution to which the present invention can be applied, the following conditions were set in order to determine the simulation conditions.

First, the distribution ratio of sodium and potassium in the lithium hydroxide crystallization step obtained in advance is applied, and the return ratio in the carbonation step is set to 0. Namely, considering a case where the lithium hydroxide crystal is recovered by fractional crystallization operation and the crystallization mother liquor with concentrated impurities is discarded outside the system, the blow rate in the lithium hydroxide crystallization step was set to 40%. Herein, the blow rate defined in the present invention means the proportion of lithium discharged to the next step as the mother liquor out of the lithium flowing into the lithium hydroxide crystallization step. Thus, under conditions where the blow rate is 40% by the fractional crystallization operation and no lithium is recycled to the electrochemical membrane separation step, the yield of lithium hydroxide obtained as the final product is 60% of lithium input of the aqueous raw material solution feed (expressed in the present invention as 60% of lithium hydroxide yield).

A conventional technique for obtaining high-purity lithium hydroxide without recycling the lithium derived from the lithium hydroxide crystallization mother liquor thus blown is defined as Comparative Example 1 in the present invention.

Further, when the amounts of sodium and potassium contained in lithium hydroxide crystals (lithium hydroxide monohydrate) as a final product are 20 ppm and 10 ppm, respectively, during steady-state operation, the values of the raw material aqueous solution were determined as Na/Li = 0.0464 and K/Li = 0.0640 by the simulation. The relative amounts of sodium and potassium contained in the lithium hydroxide crystallization mother liquor were Na/Li = 0.116 and K/Li = 0.160 during steady operation.

The amounts of sodium and potassium impurities contained in the raw material aqueous solution were set to these values, and the above simulation was performed again by such conditions that the return ratios obtained from the above experimental results was applied, the amounts of impurities in the product lithium hydroxide crystal were sodium 20 ppm or less and potassium 10 ppm or less, and the minimum blow rate satisfying both of these is adopted (simulation numbers 1A and 1B). For each of experiment numbers 1A and 1B, lithium hydroxide yield (the percentage of lithium obtained as lithium hydroxide crystals in the charged lithium as raw material aqueous solution) was 96.5% during steady operation. In this, it was assumed that the total amount of alkali metal was converted to the sulfate solution in the acid dissolution step (the same assumption is applied to the following simulations).

### Example 2:

The same operation as in Example 1 was carried out, except that the compositions of the simulated lithium hydroxide crystallization mother liquor to which the carbonation reaction was applied were Na/Li = 0.28, K/Li = 0.31, and the total alkali concentration was 5.29 mol/L. The carbonation reaction, solid-liquid separation and washing were carried out in the same manner as in Example 1, except that the end point of the carbonation reaction was set to a solution pH of 8.83 (85.6°C).

The reversion ratio Z=Z1 were calculated from the weight of the sample and the filtrate and the analytical results for the unwashed solids and were 94.2%, 11.2% and 16.5% for lithium, sodium and potassium, respectively (Experiment No. 2A). In addition, for the samples washed once, the reversion ratios were 93.3%, 0.46% and 1.3%, respectively (Experiment No. 2B).

Applying these return ratios to the assumptions of the simulation adopted in Example 1 and performing the calculation cycle again, lithium hydroxide yields were 97.2% and 97.3% during steady operation for Experiment Nos. 2A and 2B, respectively.

Table 1 summarizes the operating conditions used in Examples 1 and 2 and Table 2 summarizes the results of simulation based on these results.

**Table 1**

| Experiment No. | Na/Li (weight ratio) | K/Li (weight ratio) | Washing operation for the solid content in the carbonization step |
|---|---|---|---|
| 1A | 0.083 | 0.11 | Not conducted |
| 1B | 0.083 | 0.11 | One operation |
| 2A | 0.28 | 0.31 | Not conducted |
| 2B | 0.28 | 0.31 | One operation |

**Table 1 (Continued)**

| Experiment No. | Return ratio of lithium | Return ratio of sodium | Return ratio of potassium |
|---|---|---|---|
| 1A | 92.1% | 7.8% | 8.8% |
| 1B | 91.3% | 1.1% | 0.39% |
| 2A | 94.2% | 11% | 17% |
| 2B | 93.3% | 0.46% | 1.3% |

**Table 2**

| Operation condition under minimum blow rate satisfying both of Na≤20 ppm and K≤10 ppm | | | |
|---|---|---|---|
| Simulation No. | Lithium hydroxide yield | Blow rate of lithium hydroxide crystallization | Relative throughput |
| 1A | 96.5% | 31.3% | 1.41 |
| 1B | 96.5% | 29.5% | 1.37 |
| 2A | 97.2% | 33.1% | 1.45 |
| 2B | 97.3% | 29.4% | 1.38 |

As seen from Tables 1 and 2, the effects of the present invention can be understood as follows. That is, by recovering lithium as a solid content through the carbonation step and then recycling it through the acid dissolution step to the electrochemical membrane separation step, the lithium hydroxide yield can be increased to 95% or more from 60% compared to the case without this process. In addition, the solid content that was washed once in the carbonation step contained impurities in an amount that could not be said to be high-purity lithium carbonate (Experiment No. 1B), and the unwashed product contained around 10% of impurities (Experiment No. 1A). In spite of these situations, there can be obtained such simulation results that the lithium hydroxide yield exceeded 95% during steady operation.

Considering the following points, it is easy to understand the reason why the lithium hydroxide crystals can be crystallized so as to keep the purity of the lithium hydroxide crystals high despite the presence of a large amount of impurities in the lithium-containing carbonate compound.

Purification in lithium hydroxide crystallization is dominantly controlled by the distribution ratio, but if the crystallization operation is continued, impurities are concentrated in the crystallization mother liquor, so that the concentration of impurities in the crystals increases. As seen from the flow chart as exemplified in FIG. 1, when in addition to lithium supplied from the raw material aqueous solution, lithium from which most of the impurities have been removed through the carbonation step is recycled through the electrochemical membrane separation step to the lithium hydroxide crystallization step, there can be attained such effect that impurities in the lithium hydroxide crystallization mother liquor are diluted with lithium whose impurity concentration has been reduced. Therefore, high-purity lithium hydroxide crystals can be obtained as a final product without increasing the blow rate in the crystallization operation.

For example, when analyzing the results of simulation number 1A in detail, the impurities in the raw material aqueous solution are Na/Li = 0.0464 and K/Li = 0.0640. On the other hand the recovered lithium-containing solids have Na/Li = 0.010 and K/Li = 0.015. Similarly, in the lithium-containing solution introduced from the electrochemical membrane separation process to the lithium hydroxide crystallization process, an effect of impurities being diluted by recycled lithium to Na/Li=0.036 and K/Li=0.050 can be understood.

If the concentration of impurities in the solution introduced into the lithium hydroxide crystallization step is reduced in this way, it can be easily attained to obtain high-purity lithium hydroxide as crystals. That is, the feature of the present invention is characterized in that it is easy to obtain high-purity lithium hydroxide by increasing the amount of lithium recycled into the system. As a conventional technique, there is known a method of discharging the lithium hydroxide crystallization mother liquor outside the system in which impurities are concentrated, or a method recycling the remained liquid content into the system after recovering the solid content in the carbonation. In the former method, however there is no recycled lithium in the system, and in the latter method, not only the amount of lithium recycled is less, but lithium with an increased alkali metal impurity content relative to lithium is recycled, so that the aforementioned effects in the present invention cannot be attained.

In the operation of decomposing the lithium-containing carbonate compound with reduced impurities such as sodium and potassium by sulfuric acid it is possible to convert lithium-containing solids into an aqueous sulfate solution with the conversion rate of substantially 100%, and it is possible to reduce the possibility of introducing new impurities from the outside of the system. Therefore, this operation is quite suitable for realizing this system efficiently.

In addition, the amount of lithium transferred to the carbonation process is the amount obtained by multiplying the relative processing amount by the blow rate. In case of the simulation number 1A when the amount of lithium supplied as the raw material aqueous solution is set to 1 (per unit time), a lithium hydroxide solution containing 0.44 amount (per unit time) of lithium is subjected to the carbonation reaction, so that it is not necessary to carbonate the entire amount of lithium. Therefore, the scale of the impurity separation process can be reduced accordingly.

In the condition of Example 2, impurities are concentrated in the lithium hydroxide crystallization mother liquor at a higher concentration (about 3 times) than those of Example 1. As seen from the simulation results in Table 2, however there is no significant difference from the simulation results based on Example 1 and this shows a characteristic of present invention. Namely, even if the amount of impurities mixed in increases due to a change in the composition of the raw material aqueous solution, the production of high-purity lithium hydroxide can be continued without significantly changing the operating conditions, thus enabling stable operation.

### Example 3:

### (Carbonate concentration-crystallization operation for carbonation reaction mother liquor)

850 g of the mother liquor after the carbonation reaction obtained in Example 1 was fed in a 1 L stainless steel vessel and heated to 70°C with a mantle heater. A concentration-crystallization operation was conducted by reducing the pressure (operating between 0.025 and 0.04 MPa in absolute pressure) while maintaining the temperature and stirring. As a result, solid content precipitated and finally 97.6 g of slurry was obtained. A solid-liquid separation operation was conducted by vacuum filtration using Buchner funnel and a filter paper no. 5C (manufactured by Advantech Co., Ltd.).

Based on the weight of the sample and the analysis results, 6.65%, 2.5% and 3.2% of lithium, sodium and potassium charged as raw materials in Example 1 were recovered as solid contents, respectively. When the return ratio Z=Z1+Z2 was calculated together with the results of Example 1, the ratios of lithium, sodium and potassium were 98.8%, 10% and 12%, respectively (Experiment No. 3). A simulation was performed in the same manner as in Examples 1 and 2 based on these return ratios (simulation number 3). The results are shown in Tables 3 and 4 together with the results of 1A.

**Table 3**

| Experiment No. | Na/Li (weight ratio) | K/Li (weight ratio) | Washing operation for the solid content in the carbonization step | Concentration operation for the mother liquor in the carbonization step |
|---|---|---|---|---|
| 1A | 0.083 | 0.11 | Not conducted | Not conducted |
| 3 | 0.083 | 0.11 | Not conducted | Conducted |

**Table 3 (Continued)**

| Experiment No. | Return ratio of lithium | Return ratio of sodium | Return ratio of potassium |
|---|---|---|---|
| 1A | 92.1% | 7.8% | 8.8% |
| 3 | 98.8% | 10% | 12% |

**Table 4**

| Simulation No. | Lithium hydroxide yield | Blow rate of lithium hydroxide crystallization | Relative throughput |
|---|---|---|---|
| 1A | 96.5% | 31.3% | 1.41 |
| 3 | 99.4% | 31.4% | 1.45 |

As seen from Table 4, compared to simulation No. 1A, there is no significant change in the operating conditions for lithium hydroxide crystallization, and the relative throughput is increased by 4%, increasing the lithium hydroxide yield to 99.4%. As mentioned above, by increasing the ratio of lithium return to the system, it becomes easier to obtain high-purity lithium hydroxide by the crystallization-operation, and even if the amount of impurities returned to the system increases, there is no need to change operating conditions significantly, so that it is again shown that the overall system stability is excellent.

### Example 4:

### (Sulfate concentration-crystallization operation for carbonate concentration-crystallization mother liquor)

The composition and concentration of the concentrated mother liquor obtained in Example 3 were Na/Li = 13.6, K/Li = 15.4, and the total amount of alkali determined by acid-base titration using a hydrochloric acid standard solution was 2.48 mol/L. About 1 L of an aqueous solution was prepared by dissolving lithium carbonate, sodium carbonate and potassium carbonate reagents in water so as to have the same composition and concentration above. When 70% sulfuric acid was added little by little to this solution, a large amount of bubbles (carbon dioxide gas) was generated. An aqueous sulfate solution was prepared by continuing to add sulfuric acid until the pH of the solution was 4.02 (33.8°C).

1058 g of this sulfate aqueous solution was taken out and charged into a 1 L stainless steel container. When the concentration operation was performed in the same manner as described in Example 3, a precipitate was produced. The operation was stopped when the slurry weight was concentrated to 427 g. After cooling the slurry to 5°C, a solid-liquid separation operation was performed by vacuum filtration using a Buchner funnel and a filter paper No. 5C manufactured by Advantech Co., Ltd. A portion of the solid content (98.9 g) was separated, dispersed in 30 g of water, and then subjected to solid-liquid separation to form a new solid content cake, and thereafter the obtained crystals were washed by passing 120 g of water.

An ICP emission spectrometry specimen was prepared by washing the obtained crystals, drying thereof at 60°C and dissolving a part thereof. From the results of contents of alkali metals by the ICP measurement to the specimen, the amounts of lithium, sodium, and potassium contained in the washed crystals were determined as 39 ppm, 16% by weight and 17% by weight, respectively and very little amount of lithium was contained in the washed solids.

From the sample weight and liquid content analysis results, with regard to the dissolved lithium, sodium and potassium in the solution before the concentration, calculation results of percentages of lithium, sodium and potassium dissolved in the liquid content obtained by the solid-liquid separation operation after the concentration were 57.4%, 13% and 17%, respectively.

Similarly, from the analytical results and weights of the crystals before and after washing, the calculated amounts of alkali metal eluted into the washing filtrate were 40.5% for lithium, 36% for sodium and 4.4% for potassium.

With the concentrated slurry obtained in this example, if the liquid content obtained by solid-liquid separation and the washing filtrate of the solid content obtained at the same time are combined and returned to the electrochemical membrane separation step, 97.8%, 49% and 22% of the lithium, sodium and potassium, respectively of them introduced into the sulfate concentration-crystallization step will be returned to the electrochemical membrane separation step. Since the solids after washing contain only a very small amount of lithium (39 ppm as dry powder), these solutions should contain 99% or more of the lithium, but the calculation result based on analytical values is 97.8%, then it is presumed to be due to experimental and analytical errors. However, in the simulation, in a case where the lithium recovery ratio is set to be low, the lithium hydroxide yield will be disadvantageous, so that there is no risk of overestimating the simulation results.

Also, if only the liquid portion obtained by the solid-liquid separation of the slurry is returned to the electrochemical membrane separation step (the cleaning filtrate is discharged outside the system), these values are 57.4%, 13% and 17%, respectively.

The return ratios Z3 are calculated based on the return ratios Z in Example3, the amounts remaining in the liquid (1-Z), that is, 1.2%, 90% and 88% for lithium, sodium and potassium, respectively, are multiplied by these values. When both liquid from the slurry solid-liquid separation and the washing filtrate are returned (experiment number, simulation number 4A herein), the return rates Z are 1.22%, 44% and 19%, respectively for lithium, sodium and potassium, respectively. When only the liquid content from the slurry solid-liquid separation is returned (experiment number, simulation number 4B herein), the return ratios Z are 0.72%, 11% and 15%, respectively. Calculating the return ratios Z = Z1 + Z2 + Z3 from these return ratios Z3, Z of lithium, sodium and potassium in experiment number 4A are 99.97%, 54% and 31%, and in experiment number 4B, the return ratios Z are 99.5%, 22% and 27%, respectively. The results of simulations based on the above results are shown in Tables 5 and 6 together with the results of 1A and 3 (simulation No. 4A and 4B).

**Table 5**

| Experiment No. | Washing operation for the solid content in the carbonization step | Concentration operation for the mother liquor in the carbonization step | Treating the washing filtrate of sulfate solid content |
|---|---|---|---|
| 1A | Not conducted | Not conducted | - |
| 3 | Not conducted | Conducted | - |
| 4A | Not conducted | Conducted | Returned to system |
| 4B | Not conducted | Conducted | Disposed outside the system |

**Table 5 (Continued)**

| Experiment No. | Return ratio of lithium | Return ratio of sodium | Return ratio of potassium |
|---|---|---|---|
| 1A | 92.1% | 7.8% | 8.8% |
| 3 | 98.8% | 10% | 12% |
| 4A | 99.97% | 54% | 31% |
| 4B | 99.5% | 22% | 27% |

**Table 6**

| Simulation No. | Lithium hydroxide yield | Blow rate of lithium hydroxide crystallization | Relative throughput |
|---|---|---|---|
| 1A | 96.5% | 31.3% | 1.41 |
| 3 | 99.4% | 31.4% | 1.45 |
| 4A | 99.97% | 46.0% | 1.85 |
| 4B | 99.7% | 35.5% | 1.55 |

From the results in Table 6, simulation No. 4A, which is the case of maximally recovering lithium, was able to increase the yield of lithium hydroxide to 99.97%. Although reducing facility operational efficiency because of also increasing the relative throughput, it is valuable in such operation condition that the total amount of waste can be reduced, even by a small percentage in case of operation where waste disposal costs are high.

In the case of 4B in which the washed filtrate of the solid content obtained by the sulfate concentration-crystallization is discharged outside the system, it is shown that the increase in the relative throughput and the blow rate in the lithium hydroxide crystallization is not so large.

The operation of Experiment No. 4A was carried out under the setting of increasing the amount of water passing in the cleaning operation in order to show that the amount of lithium contained in the solid content was reduced. When using the present invention in actual operations, naturally the degree of cleaning of the solids should be optimized, and therefore the amount of cleaning liquid can be reduced. Since such operating conditions are considered to exhibit a return ratio between 4A and 4B above, it is possible to either recycle the cleaning filtrate into the system, discharge it outside the system, or recycle a part of it into the system, and an optimized condition can be performed while considering waste disposal costs and facility operating efficiency.

### Reference example 1:

### (Separation and recovery of lithium from sulfate aqueous solution by concentration-crystallization operation)

After neutralizing the mother liquor discharged from the lithium hydroxide crystallization operation with sulfuric acid to form a sulfate solution, it was confirmed whether it is possible to separate lithium, sodium and potassium by a concentration-crystallization operation and recycle thereof.

The experiment was conducted by concentrating a simulated solution of a sulfate reagent dissolved in water. Lithium sulfate has such properties that the higher the solution temperature, the lower the solubility of lithium sulfate, and the higher the solution density, the higher the solubility of sodium sulfate and potassium sulfate. Therefore, it is presumed that lithium sulfate can be obtained as a solid content by heating and concentrating the mixture of these sulfate solutions.

A simulated solution was prepared by dissolving each reagent so that the total concentration of alkali metals obtained by dissolving lithium sulfate, sodium sulfate and potassium sulfate is 0.226 mol/L, and Na/Li = 0.11 and K/Li = 0.084. 1100 g of thus prepared simulated solution was fed in a 1 L stainless steel container, heated with a mantle heater to 70°C, and concentrated under reduced pressure to an absolute pressure of 0.02 PMa while maintaining stirring.

The concentration operation was carried out for a total of 4.5 hours, during which the liquid portion was sampled five times. A solid content precipitated as the concentration progressed. The slurry was subjected to solid-liquid separation by vacuum filtration using Buchner funnel and filter paper No.5C manufactured by Advantech Co., Ltd. The solid content was recovered without cleaning, the weight of the solid content and the liquid content were recorded, and the composition was analyzed.

Taking into account the amount of elements taken out of the system by sampling during the concentration operation, the material balance was calculated. In the liquid content recovered in the solid-liquid separation, lithium, sodium and potassium were dissolved in amounts of 13%, 53% and 22%, respectively based on the initial fed amount. From this result, it can be assigned that if the unwashed solids are re-dissolved and returned to the electrochemical membrane separation step, the return rates Z of lithium, sodium and potassium are 87%, 47% and 78%, respectively.

A simulation was performed by applying this return ratio to the same conditions as in the Example. As a result, the lithium hydroxide yield was 76.4%, the blow rate of lithium hydroxide crystallization was 70.4% and the relative throughput was 2.58. That is, although the amount of lithium to be processed in the electrochemical membrane separation step increases to 2.58 times the amount supplied from the raw material aqueous solution per unit time, the amount of lithium supplied from the raw material aqueous solution recovered as lithium hydroxide is 76.4%. This result shows that the above production process has a low yield of lithium hydroxide in spite of a large increase in the throughput of the electrochemical membrane separation step and the crystallization step.

If the concentration operation of the sulfate solution shown in this example is stopped early, it is thought that the amount of sodium and potassium mixed in the solid content (mainly comprising lithium sulfate) can be reduced. However, since the ratio of lithium availably recovered as a solid content is significantly reduced, it is clear from consideration of the examples that a significant decrease of the final yield of lithium hydroxide is unavoidable.

It is also known that lithium sulfate and potassium sulfate as well as lithium sulfate and sodium sulfate form double salts. The composition of the mother liquor sample obtained during this concentration-crystallization operation is shown in Table 7, and it can be observed that there is no variation in the value of K/Li during the final stage of concentration.

When only lithium sulfate is precipitated by the concentration operation, the Na/Li and K/Li values increase, and the data up to 4 hours in Table 7 show this condition. However, it can be understood that whereby the concentration progressed, the value of K/Li reached the double salt formation composition, so that the double salt of lithium sulfate and potassium sulfate was generated and precipitated, and the amount of potassium contained in the solid content increased significantly.

**Table 7**

| Sampling time (hr) | 0 | 1 | 2 | 3 | 4 | 4.5 |
|---|---|---|---|---|---|---|
| Li/(Li+Na+K) | 0.84 | 0.82 | 0.80 | 0.76 | 0.67 | 0.64 |
| Na/Li | 0.11 | 0.13 | 0.16 | 0.21 | 0.36 | 0.43 |
| K/Li | 0.084 | 0.087 | 0.10 | 0.11 | 0.14 | 0.14 |

In this Reference Example, a simulated raw material solution was prepared so that the values of Na/Li and K/Li were almost same as in Example 1 (both about 0.1). It is expected that when the value(s) of Na/Li and/or K/Li increase(s) as in Example 2 (both about 0.3 in Example 2), the timing of double salt formation in the concentration step becomes earlier, and the amount(s) of sodium and/or potassium mixed in the solid content increase(s) greater than those in this Reference Example. Therefore, it is shown that it is not practical to separate and recover lithium from sulfate solutions by concentration-crystallization. As described above, when the concentration of alkali metal impurities contained in the mother liquor for crystallization of lithium hydroxide increases, separation of lithium and alkali metal impurities becomes difficult in contrast to the slight difference observed between Examples 1 and 2.

### Reference Example 2:

### (Separation and recovery of lithium from sulfate aqueous solution by cooling crystallization operation)

Assuming a case where an aqueous solution with a lithium hydroxide concentration of 14.2% by weight (the saturated solubility of lithium hydroxide alone at 80°C) is neutralized with a stoichiometric amount of sulfuric acid to convert it into an aqueous solution of lithium sulfate. Calculations show that the required amount (weight) of sulfuric acid is 2.05 times the amount of lithium hydroxide in the solution, and the concentration of lithium sulfate in the solution after neutralization is 25.3%. At this concentration, the entire amount dissolves even in a low-temperature (for example, 25°C or lower) solution. In this sulfate solution, 3.19% by weight of lithium is dissolved as ions.

In the case of producing such a solution, if the initial lithium hydroxide solution contains sodium such that Na/Li = 0.3, 3.19X0.3 = 0.957% by weight of sodium will be dissolved in the sulfate solution.

The solubility of sodium sulfate is about 4.8% by weight (about 1.5% by weight as sodium ions) at 0°C. Therefore, crystals of sodium sulfate cannot be obtained even though dissolving sodium ion of 0.957% by weight and cooling thereof to 0°C. Since it is known that the solubility of sodium sulfate increases when lithium sulfate coexists in a solution, it is not an efficient method to reduce the Na/Li value by precipitating sodium sulfate by cooling crystallization.

A similar result can be predicted for potassium sulfate (the solubility of potassium sulfate at 0°C is about 7.1% by weight, and the potassium ion content is about 3.2% by weight).

A means of preparing and cooling a sulfate solution in which the Na/Li and K/Li values are increased by some means (that is, sodium and potassium are concentrated) is also conceivable. However, from the following experiments, this means is also not effective for separating and removing sodium and potassium.

Lithium sulfate monohydrate, anhydrous sodium sulfate and anhydrous potassium sulfate reagents were weighed so that the impurity concentrations were Na/Li = 1.1 and K/Li = 0.83, and the mixture was warmed with water heated to 70°C to dissolve it. As a result, aqueous solutions containing 2.2% by weight, 2.4% by weight, and 1.8% by weight of lithium, sodium and potassium, respectively, were able to be prepared. When the aqueous solution was concentrated above this concentration, a phenomenon was observed in which precipitates were formed immediately. Although this concentration is much lower than the solubility of the single sulfate, it can be understood that the solubility of each alkali metal ion is greatly reduced because the double salt forms an equilibrium phase at 70°C.

The container containing the above mixed sulfate aqueous solution was cooled in an ice bath until the temperature of the aqueous solution reached 2°C, but no precipitate was obtained. Considering the solubility of sulfate alone (about 3.3% by weight, about 1.5% by weight, and about 3.2% by weight for lithium ion, sodium ion, and potassium ion at 0°C, respectively), it would not be surprised that sodium precipitates as sodium sulfate. It can be understood that precipitation of sodium sulfate did not actually occur because the solubility was increased by the coexisting sulfate.

As shown in this example, even if sodium and potassium are concentrated as sulfates in lithium sulfate, in a system containing a high concentration of lithium sulfate, it can be understood that it is difficult to separate sodium and potassium from lithium efficiently and recover them from the aqueous sulfate solution by cooling crystallization. It is clear that this fact is in contrast to the system in which the concentration of lithium sulfate was reduced as in Example 4.

Comparative Example 1 (indicated by simulation number C1 in the following description) is a case where the lithium hydroxide crystallization mother liquor in which impurities are concentrated in the prior art is not treated and recycled into the system. The above description shows simulation results based on the characteristic values obtained from the experiment of Comparative Example 1, Examples and Reference Examples (in the following description, Reference Example 1 is indicated as simulation number R1). In addition to these results, Table 8 also shows the results of the simulation for a case where the impurity level contained in the crystals obtained by lithium hydroxide crystallization is halved while the impurity content of the raw material aqueous solution is kept the same, namely the operating conditions satisfy 10 ppm or less of sodium and 5 ppm or less of potassium.

**Table 8**

| Technical level | Simulation No. | Return ratio of lithium | Return ratio of sodium | Return ratio of potassium |
|---|---|---|---|---|
| Operation condition under minimum blow rate satisfying both of Na≤20 ppm and K≤10 ppm | | | | |
| Comparative Example 1 | C1 | 0.0% | 0.0% | 0.0% |
| Reference Example 1 | R1 | 87.0% | 47% | 78% |
| Examples | 1A | 92.1% | 7.8% | 8.8% |
| | 1B | 91.3% | 1.1% | 0.39% |
| | 3 | 98.8% | 10% | 12% |
| | 4B | 99.5% | 22% | 27% |

| Operation condition under minimum blow rate satisfying both of Na≤10 ppm and K≤5 ppm | | | | |
|---|---|---|---|---|
| Comparative Example 1 | C1 | 0.0% | 0.0% | 0.0% |
| Reference Example 1 | R1 | 87.0% | 47% | 78% |
| Examples | 1A | 92.1% | 7.8% | 8.8% |
| | 1B | 91.3% | 1.1% | 0.39% |
| | 3 | 98.8% | 10% | 12% |
| | 4B | 99.5% | 22% | 27% |

**Table 8 (Continued)**

| Technical level | Simulation No. | Lithium hydroxide yield | Blow rate of lithium hydroxide Crystallization |
|---|---|---|---|
| Operation condition under minimum blow rate satisfying both of Na≤20 ppm and K≤10 ppm | | | |
| Comparative Example 1 | C1 | 60.0% | 40.0% |
| Reference Example 1 | R1 | 76.4% | 70.4% |
| Examples | 1A | 96.5% | 31.3% |
| | 1B | 96.5% | 29.5% |
| | 3 | 99.4% | 31.4% |
| | 4B | 99.7% | 35.5% |

| Operation condition under minimum blow rate satisfying both of Na≤10 ppm and K≤5 ppm | | | |
|---|---|---|---|
| Comparative Example 1 | C1 | 19.6% | 80.4% |
| Reference Example 1 | R1 | 52.0% | 87.4% |
| Examples | 1A | 93.0% | 48.5% |
| | 1B | 92.9% | 46.6% |
| | 3 | 98.8% | 47.9% |
| | 4B | 99.4% | 52.5% |

**Table 8 (Continued)**

| Technical level | Simulation No. | Relative throughput | Lithium hydroxide yield/Relative throughput |
|---|---|---|---|
| Operation condition under minimum blow rate satisfying both of Na≤20 ppm and K≤10 ppm | | | |
| Comparative Example 1 | C1 | 1.00 | 0.60 |
| Reference Example 1 | R1 | 2.58 | 0.30 |
| Examples | 1A | 1.41 | 0.69 |
| | 1B | 1.37 | 0.71 |
| | 3 | 1.45 | 0.69 |
| | 4B | 1.55 | 0.65 |

| Operation condition under minimum blow rate satisfying both of Na≤10 ppm and K≤5 ppm | | | |
|---|---|---|---|
| Comparative Example 1 | C1 | 1.00 | 0.20 |
| Reference Example 1 | R1 | 4.13 | 0.13 |
| Examples | 1A | 1.81 | 0.52 |
| | 1B | 1.74 | 0.53 |
| | 3 | 1.90 | 0.52 |
| | 4B | 2.09 | 0.48 |

In Table 8, the value shown in "lithium hydroxide yield/relative throughput" is the value obtained by dividing the value obtained by normalizing the lithium hydroxide yield from 0 to 1 by the relative throughput. It represents the relative value of the lithium hydroxide yield when the scales of the membrane separation step and the lithium hydroxide crystallization step are adjusted to the same standard. In other words, it is an index representing the productivity of lithium hydroxide crystals when it is assumed that these steps have the same scale.

From the results shown in Table 8, the following findings can be understood. That is, in the system containing high-concentration lithium shown in Reference Example 1, when concentration-crystallization is performed after conversion to sulfate, the yield of lithium hydroxide crystallization can be higher and increased than that of the conventional technology (Comparative Example 1). However, the value of "lithium hydroxide yield/relative throughput" decreases, so that the utilization efficiency of the facility decreases. On the other hand, when the present invention is performed, all of the lithium hydroxide yield exceeds 90%. When the composition of the raw material aqueous solution is the same and the level of impurities contained in the product is halved, in the conventional technology (Comparative Example 1) and Reference Example 1, not only the yield of lithium hydroxide is significantly reduced, but also the utilization efficiency of equipment is reduced. On the other hand, when performing the present invention, it is clearly shown that the extent of this reduction range is very small compared to the prior art (Comparative Example 1) and Reference Example 1.

Therefore, it can be understood that by utilizing the technology disclosed by the present invention, it is possible not only to increase the yield of lithium hydroxide, but also to increase the utilization efficiency of the facility.

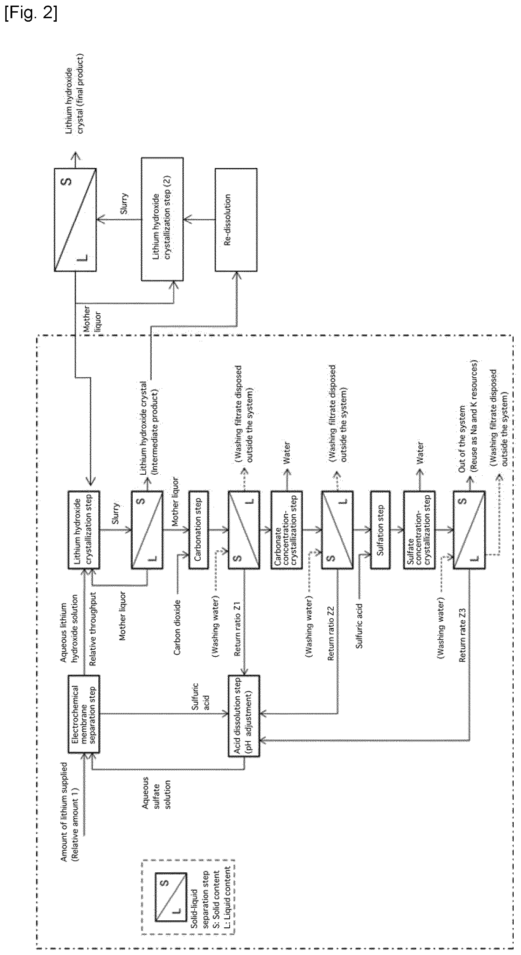

In the description of the above embodiments, only one lithium hydroxide crystallization process is applied to obtain high-purity lithium hydroxide crystals. However, it can be understood that the application shown in Fig. 2 is also a possible embodiment by understanding the aspect disclosed in the present invention.

In FIG. 2, the portion surrounded by a dot-dashed line indicates that the configuration is the same as the step shown in FIG. 1 except that the crystal obtained by lithium hydroxide crystallization is an intermediate product (this lithium hydroxide crystallization step is referred to as the first lithium hydroxide crystallization step). FIG. 2 illustrates a configuration for obtaining high-purity lithium hydroxide crystals (final product) by (I) re-dissolving this intermediate product in an aqueous medium and (J) performing lithium hydroxide crystallization again (This lithium hydroxide crystallization step is referred to a second lithium hydroxide crystallization step). The water used for re-dissolution may be water discharged from the concentration step or concentration-crystallization step.

The configuration illustrated in FIG. 2 is particularly effective when the raw material lithium sulfate contains alkali metal impurities at a high concentration. That is, the crystal of lithium hydroxide obtained in the first lithium hydroxide crystallization step within the dot-dashed line is an intermediate product (crude purified product) with a reduced impurity content. This intermediate product is repurified in the second lithium hydroxide crystallization step, (K) separating the solid content from the crystallization slurry in the solid-liquid separation step, and washing the solid content to obtain high-purity lithium hydroxide crystals as a final product. Then, the crystallization mother liquor blown from the second lithium hydroxide crystallization step is introduced into, for example, the first lithium hydroxide crystallization step. It is also possible to introduce the crystallization mother liquor into the carbonation step. Since the mechanism for discharging alkali metal impurities out of the system is the same as the configuration shown in FIG. 1, these steps can be carried out by the operations described above. In addition, since the lithium contained in the said mother liquor blown out from the second lithium hydroxide crystallization step is recycled in the same manner as the case shown in FIG. 1, the yield of lithium hydroxide obtained as a final product can be kept high.

When the present invention is carried out with such a configuration having two crystallization steps, the first lithium hydroxide crystallization step functions to adjust the amount of alkali metal impurities remaining in the system, while the second lithium hydroxide crystallization step functions to adjust the impurity level of lithium hydroxide crystals obtained as a final product. And the blow rate of each lithium hydroxide crystallization step is an important parameter to operate these functions. That is, the higher the blow rate in the first lithium hydroxide crystallization step, the more the amount of alkali metal impurities discharged outside the system after the carbonation step, so that the amount of alkali metal impurities remaining in the system is reduced. As a result, it is possible to maintain the impurity concentration of the mother liquor such that sodium hydroxide and/or potassium hydroxide do not precipitate in the first lithium hydroxide crystallization step. Thus, the higher the blow rate in the second lithium hydroxide crystallization step, the lower the concentration of impurities contained in the lithium hydroxide crystals obtained as a final product.

When lithium sulfate which is a raw material, contains a large amount of alkali metal impurities at a high concentration, the electric energy used in the electrochemical membrane separation step, and operation costs required in the carbonation step and/or the carbonate concentration-crystallization step and/or sulfate concentration-crystallization step, are relatively high compared to the amount of lithium hydroxide obtained as a product. However, lithium hydroxide can be produced even from low-grade lithium resources (resources with a low lithium content) so that this method is an important production method in the current situation where the demand for lithium hydroxide is increasing remarkably. In addition, if a sulfate concentration-crystallization step is performed and the solid content obtained in this step is appropriately washed to recover alkali metal impurities as an alkali metal resource with a reduced amount of lithium contamination, the present invention is useful for an effective method for producing lithium hydroxide and a method for separating and recovering alkali metal resources in case where a large amount of potassium is contained, whose utility value is particularly high.

### INDUSTRIAL APPLICABILITY

The method for producing lithium hydroxide according to the present invention enables the lithium contained in the raw material to be recovered as lithium hydroxide at a high yield, enables the efficient removal of alkali metal impurities using ordinary existing equipment, and enables to reduce the amount of waste substances discharged, so that it is possible to realize a lithium hydroxide production process that is extremely economical.

## Claims

1. A process for producing lithium hydroxide from lithium sulfate as a starting material containing at least one of sodium and potassium as impurities, which process comprises the following steps of (A) to (F):
(A) a production step of an aqueous lithium hydroxide solution and sulfuric acid by an electrochemical membrane separation method using lithium sulfate as a raw material;
(B) a crystallization step producing a lithium hydroxide crystal by crystallization using the obtained aqueous lithium hydroxide solution in the above electrochemical membrane separation step as a raw material;
(C) a solid-liquid separation step in which a portion of slurry in the above crystallization step is discharged and is subjected to solid-liquid separation to separate a lithium hydroxide crystal and crystallization mother liquor, and thereafter a washing step to clean the separated solid content;
(D) a carbonation step obtaining a slurry comprising a lithium-containing carbonate compound as a solid content by discharging a portion of crystallization mother liquor in said crystallization step and reacting said discharged crystallization mother liquor with carbon dioxide gas, and a solid-liquid separation step separating said slurry into a lithium-containing solid content and a liquid content;
(E) an acid dissolution step producing a lithium sulfate aqueous solution by reacting said lithium-containing solid content with sulfuric acid;
(F) a mixing step reusing the lithium sulfate aqueous solution obtained by said acid dissolution step as the raw material of said step of (A).

2. The process for producing lithium hydroxide according to claim 1, further comprising the following step (G),
(G) a carbonate concentration-crystallization step obtaining a slurry by subjecting said liquid content obtained from said carbonation step and from said solid-liquid separation step in said step (D) to concentration-crystallization and a solid-liquid separation step separating the obtained slurry into a lithium-containing solid content and a liquid content,
wherein an operation so as to feed the obtained solid content in the said solid-liquid separation step to the above step (E) is further included.

3. The process for producing lithium hydroxide according to claim 1 or 2, further comprising the following step (H) comprising:
- an aqueous sulfate solution production step by adding sulfuric acid to the liquid content obtained by the carbonate concentration-crystallization step and solid-liquid separation step in said step (G),
- a sulfate concentration-crystallization step by concentration-crystallization of the obtained sulfate solution to obtain a slurry, and
- a solid-liquid separation step to separate the obtained slurry to a solid content and liquid content,
wherein an operation of feeding the liquid content obtained by the said solid-liquid separation process to the above step (E) or step (F) is further included.

4. The process for producing lithium hydroxide according to any one of claims 1 to 3, further comprising washing step(s) as a step conducted in said solid-liquid separation step or as a step conducted after solid-liquid separation to any or all of solid content(s) obtained in said carbonation and solid-liquid separation steps in said step (D), obtained in said carbonate concentration-crystallization and solid-liquid separation steps in said step (G), and obtained in said sulfate concentration-crystallization and solid-liquid separation steps in the above step (H).

5. The process for producing lithium hydroxide according to any one of claims 1 to 4, further comprising an operation feeding a part or all of the washing filtrate obtained in the washing step according to the claim 4 into said step (E).

6. The process for producing lithium hydroxide according to any one of claims 1 to 5, wherein said electrochemical membrane separation method process in said step (A) is an electrodialysis method.

7. The process for producing lithium hydroxide according to any one of claims 1 to 6, further comprising:
(I) a re-dissolving step of re-dissolving the lithium hydroxide crystals in the crystallization step (B) in an aqueous medium,
(J) a re-crystallization step producing lithium hydroxide crystals by further crystallization a second lithium hydroxide crystallization step), and
(K) a re-solid-liquid separation step of separating the slurry obtained in the re-crystallization step into lithium hydroxide crystals and a crystallization mother liquor, and washing step of cleaning the said solid content; further comprising an operation supplying the crystallization mother liquor obtained in the re-solid-liquid separation to the crystallization step (B) and/or to the carbonation step (D) and the re-crystallization step (J).
